# EUROPEAN PATENT APPLICATION

(11) **EP 1 837 493 A2**
(43) Date of publication of application: **26.09.2007**
(21) Application number: 07251101.7
(22) Date of filing: 15.03.2007
(51) Int. Cl.: F01N 3/022

(54) **Honeycomb structure**

(30) Priority: 20.03.2006 JP 2006077719
(71) Applicant: NGK INSULATORS, LTD., Nagoya-City, Aichi Pref. 467-8530 (JP)
(72) Inventor: Kai, Ryuji, Legal Affairs and I.P. Dept., Nagoya City Aichi-ken 467-8530 (JP)
(74) Representative: Paget, Hugh Charles Edward

(57) **Abstract**

A honeycomb structure (1) includes: a honeycomb segment joined body (10) having a plurality of honeycomb segments (2) unitarily joined at bonding faces thereof by means of a bonding material layer (9,12), and an outer peripheral coat layer (4) covering a surface of an outer peripheral portion (22) of the honeycomb segment joined body (10); in which a plurality of cells (5) functioning as fluid passages are disposed to be in parallel with one another in a direction of a central axis. A bonding material layer (9,12) between honeycomb segments (2) constituting a central portion with respect to a diametral direction of the honeycomb segment joined body (10) is made thicker than a bonding material layer (9,12) between honeycomb segments (2) constituting the outer peripheral portion (22) of the honeycomb segment joined body (10). The honeycomb structure (1) is useful as a trapping filter for exhaust gas, particularly, as a diesel particulate filter (DPF) for trapping particulate matter or the like in exhaust gas from a diesel engine and can effectively inhibit occurrence of a defect such as a crack due to thermal stress upon use or upon regeneration.

## Description

### Background of the Invention and Related Art Statement

The present invention relates to a honeycomb structure where a plurality of honeycomb segments are unitarily joined by means of a bonding material layer. More specifically, the present invention relates to a honeycomb structure which is useful as a trapping filter for exhaust gas, particularly, as a diesel particulate filter (DPF) for trapping particulate matter, or the like, in exhaust gas from a diesel engine and which can effectively inhibit occurrence of a defect such as a crack due to thermal stress upon use or upon regeneration.

A honeycomb structure has been used by being incorporated into an exhaust gas system or the like of a diesel engine as a trapping filter for exhaust gas, for example, a diesel particulate filter (DPF) for trapping and removing particulate matter contained in exhaust gas from a diesel engine or the like. Such a honeycomb structure has an disadvantage of having a defect such as a crack due to thermal stress because of uneven temperature rise in the whole honeycomb structure upon use (when particulate mater is trapped and removed) or upon regeneration (when particulate matter accumulated inside the filter is combusted and removed in order to stop increase in pressure loss due to particulate matter accumulated inside the filter with time). From the viewpoint of solving such an disadvantage, there has been proposed a honeycomb structure having reduced thermal stress by constituting the honeycomb structure as a honeycomb segment joined body where a plurality of segments unitarily joined at bonding faces by means of a bonding material layer.

However, since a silicon carbide (SiC) honeycomb structure, which is expected to be used because it has a merit of excellent thermal resistance, also has a demerit of low thermal shock resistance because of large thermal expansion coefficient in comparison with a cordierite honeycomb structure, it has a disadvantage of having a difficulty in sufficiently making use of the merit. In addition, because of a remarkable increase in thermal stress caused upon use and upon regeneration in comparison with a conventional one in accordance with recent size enlargement of filters, the frequency and the extent of occurrence of defects due to thermal stress become intensified by leaps and bounds. In order to cope with such a disadvantage, there is disclosed a method for manufacturing a ceramic structure (honeycomb structure) by repeating the steps of forming an adhesive paste layer (bonding material layer) on 60% or more of the total area of the side faces of a porous ceramic member (honeycomb segment) and piling up another porous ceramic member to incorporate ceramic blocks (see JP-A-2002-219317).

In the above method for manufacturing a ceramic structure (honeycomb structure), honeycomb segments are joined generally by applying pressure with a biaxial press to give a predetermined shape in order to enhance productivity after temporary piling of the honeycomb segments after application of a bonding material on bonding faces. However, as the number of honeycomb segments piled up is increased, there arises a problem of uneven thickness of a bonding material between honeycomb segments because the central portion of the resultant honeycomb segment joined body is not sufficiently pressed.

However, when thickness of the bonding material at the bonding faces between honeycomb segments is made even, the above ceramic structure (honeycomb structure) has a larger thermal load in the central portion than in outer peripheral portion upon practical use. Therefore, it is necessary to reduce heat capacity in the central portion of the honeycomb segment joined body as much as possible in order to inhibit occurrence of a defect due to thermal stress.

### Summary of the Invention

The present invention has been made in view of the above problem and aims to provide a honeycomb structure which is useful as a trapping filter for exhaust gas, particularly, as a diesel particulate filter (DPF) for trapping particulate matter or the like in exhaust gas from a diesel engine and which can effectively inhibit occurrence of a defect such as a crack due to thermal stress upon use or upon regeneration.

In order to achieve the above object, the present invention provides the following ceramic structures.

[1] A honeycomb structure comprising: a honeycomb segment joined body having a plurality of honeycomb segments unitarily joined at bonding faces thereof by means of a bonding material layer, and an outer peripheral coat layer covering a surface of an outer peripheral portion of the honeycomb segment joined body; in which a plurality of cells functioning as fluid passages are disposed to be in parallel with one another in a direction of a central axis; wherein a bonding material layer between honeycomb segments constituting a central portion with respect to a diametral direction of the honeycomb segment joined body is made thicker than a bonding material layer between honeycomb segments constituting the outer peripheral portion of the honeycomb segment joined body.

[2] A honeycomb structure according to above item [1], wherein a bonding material layer between the honeycomb segments constituting the central portion with respect to a diametral direction of the honeycomb segment joined body is 2 to 5 times thicker than a bonding material layer between the honeycomb segments constituting the outer peripheral portion of the honeycomb segment joined body.

[3] A honeycomb structure according to above item [1] or [2], wherein an R portion is provided at a corner of each of the honeycomb segments constituting the honeycomb segment joined body.

[4] A honeycomb structure according to any one of above items [1] to [3], wherein a size of the honeycomb segments constituting the central portion with respect to a diametral direction of the honeycomb segment joined body is smaller than that of the honeycomb segments constituting the outer peripheral portion of the honeycomb segment joined body.

A ceramic structure of the present invention is useful as a trapping filter for exhaust gas, particularly, as a diesel particulate filter (DPF) for trapping particulate matter or the like in exhaust gas from a diesel engine and can effectively inhibit occurrence of a defect such as a crack due to thermal stress upon use or upon regeneration.

### Brief Description of the Drawings

Fig. 1 is an example of a cross-sectional view in a diametral direction in a honeycomb structure (Example 1) of the present invention.

Fig. 2 is an example of a cross-sectional view in a diametral direction in a honeycomb structure (Example 2) of the present invention.

Fig. 3 is an example of a cross-sectional view in a diametral direction in a honeycomb structure (Comparative Example 1).

Fig. 4 is a cross-sectional view in a diametral direction showing another embodiment of a honeycomb structure of the present invention.

Fig. 5 is a cross-sectional view in a diametral direction showing still another embodiment of a honeycomb structure of the present invention.

Fig. 6 is an example of a cross-sectional view in a diametral direction in a conventional honeycomb structure (Comparative Example 2).

Fig. 7 is a schematic view showing a measurement position of a adhesive thickness in portions where four honeycomb segments not disposed in the outermost periphery of a honeycomb structure are facing one another.

Fig. 8 is a perspective view schematically showing an example of an embodiment (having a circular whole cross section taken along a plane perpendicular to the central axis) of a honeycomb structure.

Fig. 9 is a perspective view schematically showing an example of a honeycomb segment used in a honeycomb structure.

Fig. 10 is a cross-sectional view taken along A-A of Fig. 9.

### Detailed Description of the Invention

A honeycomb structure of the present invention will hereinbelow be described in detail on the basis of specific embodiments. However, the present invention is by no means limited to these embodiments, and various changes, modifications, and improvements may be added on the basis of knowledge of those skilled in the art without deviating from the scope of the present invention.

A honeycomb structure of the present invention is provided with a honeycomb segment joined body having a plurality of honeycomb segments unitarily joined at bonding faces thereof by means of a bonding material layer, and an outer peripheral coat layer covering a surface of an outer peripheral portion of the honeycomb segment joined body; and has a structure in which a plurality of cells functioning as fluid passages are disposed to be in parallel with one another in a direction of a central axis; where a thickness of a bonding material layer between honeycomb segments constituting a central portion with respect to a diametral direction of the honeycomb segment joined body is made thicker than a thickness of a bonding material layer between honeycomb segments constituting the outer peripheral portion of the honeycomb segment joined body.

In a honeycomb structure of the present invention, by making a thickness of a joint portion (bonding material layer) between segments in a central portion of the honeycomb structure (with respect to a diametral direction of the honeycomb structure) than usual, a heat capacity can be reduced in the whole central portion of a honeycomb segment joined body. That is, in a honeycomb structure of the present invention, by thickening, for example, a thickness of a joint portion (bonding material layer) in contact with a segment which is prone to have high temperature upon soot combustion, more heat in the segment can be released to the bonding material to lower the highest temperature.

A honeycomb structure of the present invention is characterized in that a thickness of a bonding material layer in the central portion is made thicker than that in the outer peripheral portion. In the case of making a thickness of a bonding material layer in the central portion of a honeycomb structure thicker without changing the size of each segment, a gap between segments constituting the outer peripheral portion becomes narrow, and a contact of segments upon joining operations may cause generation of damage in a segment. Therefore, in order to inhibit segments from being brought in contact with one another at a corner thereof, it is preferable to provide each of the honeycomb segments constituting the honeycomb segment joined body with an R portion at corners thereof.

In a honeycomb structure of the present invention, it is also preferable that a size of the honeycomb segments constituting the central portion with respect to a diametral direction of the honeycomb segment joined body is smaller than that of the honeycomb segments constituting the outer peripheral portion of the honeycomb segment joined body. In this case, thickness of a joint portion (bonding material layer) between segments in a central portion constituting the honeycomb structure (with respect to a diametral direction of the honeycomb structure) can be secured more certainly, and a volume ratio of honeycomb segments constituting the outer peripheral portion of the honeycomb segments joined body can be made the same as that of a conventional honeycomb structure. Therefore, deterioration in strength of a honeycomb structure can be inhibited.

From the above, in a honeycomb structure of the present invention, temperature rise in the whole honeycomb structure can be suppressed upon use (when particulate mater is trapped and removed) and upon regeneration (when particulate matter accumulated inside the filter is combusted to be removed in order to stop increase in pressure loss due to particulate matter accumulated inside the filter with time), temperature rise in a segment central portion constituting a central portion of the honeycomb structure can be relieved, and a defect such as a crack or breakage due to thermal stress can be inhibited.

Next, a honeycomb structure of the present invention will be described more specifically on the basis of the drawings.

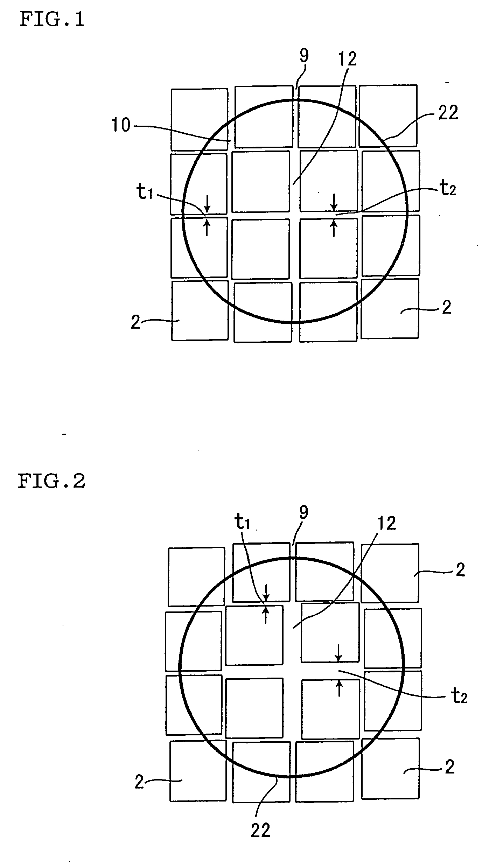

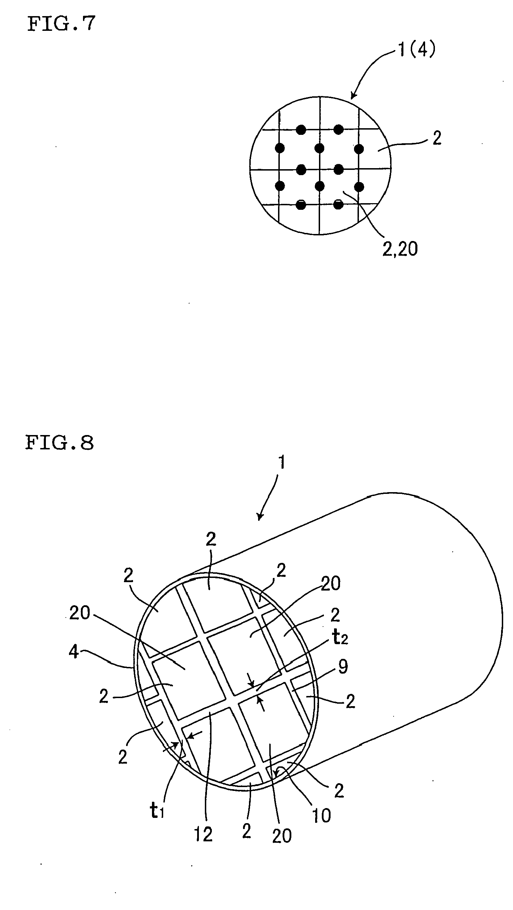

Each of Fig. 1 and Fig. 2 shows an example of a cross-sectional view in a diametral direction in a honeycomb structure of the present invention. Fig. 8 is a perspective view schematically showing an example of an embodiment (having a circular whole cross section taken along a plane perpendicular to the central axis) of a honeycomb structure.

As shown in Fig. 8, a honeycomb structure of the present invention is a honeycomb structure 1 provided with: a honeycomb segment joined body 10 having a plurality of honeycomb segments 2 unitarily joined at bonding faces thereof by means of bonding material layers 9 and 12, and an outer peripheral coat layer 4 covering a surface of an outer peripheral portion of the honeycomb segment joined body 10; and having a structure in which a plurality of cells functioning as fluid passages are disposed to be in parallel with one another in a direction of a central axis. A thickness t₂ of a bonding material layer 12 between honeycomb segments 2 constituting a central portion with respect to a diametral direction of the honeycomb segment joined body 10 is made larger than a thickness t₁ of a bonding material layer 9 between honeycomb segments constituting the outer peripheral portion of the honeycomb segment joined body 10.

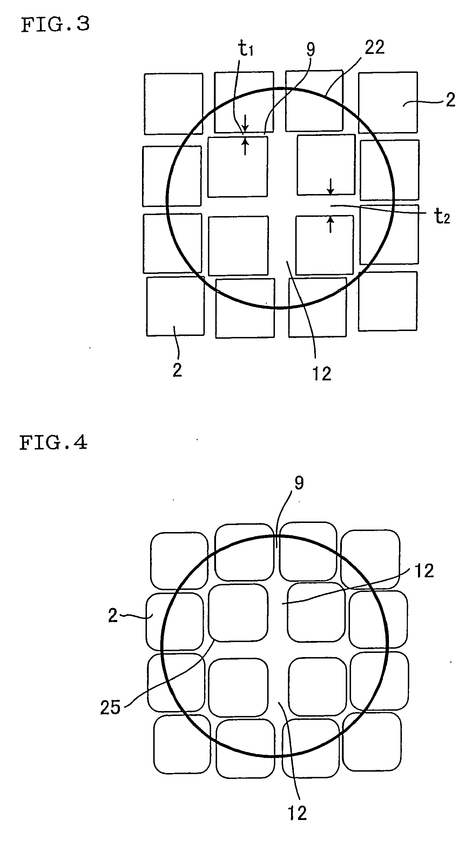

As shown in Figs. 1 and 2, in a honeycomb structure of the present invention, there is an embodiment where a bonding material layer 12 in a central portion of a honeycomb segment joined body 10 is made thick without changing a size of each honeycomb segment 2.
In the case of the above embodiment, a gap between honeycomb segments 2 constituting the outer peripheral portion becomes narrow, and a contact of honeycomb segments 2 may be caused upon joining operations to generate damage in a honeycomb segment 2.
Therefore, in the present invention, as shown in Fig. 4, it is preferable that an R portion 25 is provided at a corner of each of the honeycomb segments 2 constituting the honeycomb segment joined body 10 in order to prevent the honeycomb segments 2 from being brought into contact with one another at corners thereof.

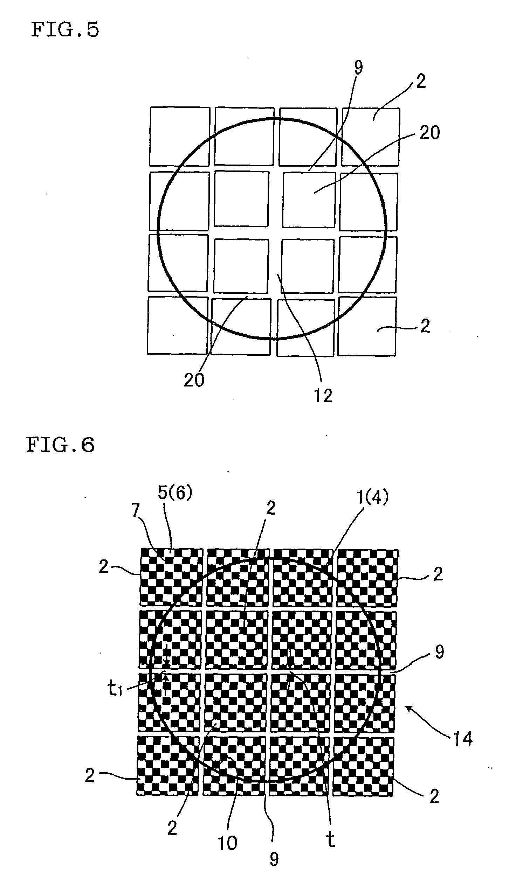

Fig. 5 is a cross-sectional view showing another embodiment of a honeycomb structure of the present invention. By constituting the central portion with respect to a diametral direction of a honeycomb segment joined body 10 by honeycomb segments 20 which are smaller than honeycomb segments 2 constituting the outer periphery of the honeycomb segment joined body 10, a thickness t₂ of a bonding material layer 12 between the honeycomb segments 2 are secured.

In a honeycomb structure of the present invention, it is preferable that a thickness t₂ of a bonding material layer 12 between the honeycomb segments 2 constituting the central portion with respect to a diametral direction of the honeycomb segment joined body 10 is 2 to 5 times (preferably 2.5 to 4 times) larger than a thickness t₁ of a bonding material layer 9 between the honeycomb segments 2 (20) constituting the outer peripheral portion of the honeycomb segment joined body 10. This is because, in the case that the aforementioned thickness of the bonding material layer is less than two times, the highest temperature lowering effect cannot remarkably be obtained. On the other hand, in the case that the aforementioned thickness of the bonding material layer is above 5 times, that is, in the case that the bonding material layer is made too thick, the temperature gradient between the honeycomb segments constituting the central portion and the honeycomb segments constituting the outer peripheral portion becomes large, and influence of increase in the temperature gradient exceeds the effect in lowering the highest temperature. Therefore, thermal stress is increased, and breakage upon regeneration is prone to be caused.

In addition, in a honeycomb structure of the present invention, for example, as shown in Fig. 1, after joining honeycomb segments 2 and 20 with bonding material layers (partial bonding material layers) 9 and 12, the outer periphery of the honeycomb segment joined body 10 is subjected to grinding to show the outer peripheral surface 22 so that the whole cross-sectional shape taken along a plane perpendicular to the central axis of the honeycomb structure 1 may be a circle, an ellipse, a racetrack shape, or a partially deformed shape thereof, and the outer peripheral surface 22 is covered with an outer peripheral coat layer 4 (see Fig. 8). In the case that the honeycomb structure 1 is used as a DPF, particulate matter containing soot discharged from a diesel engine can be trapped by disposing the honeycomb structure 1 in an exhaust gas system or the like of a diesel engine.

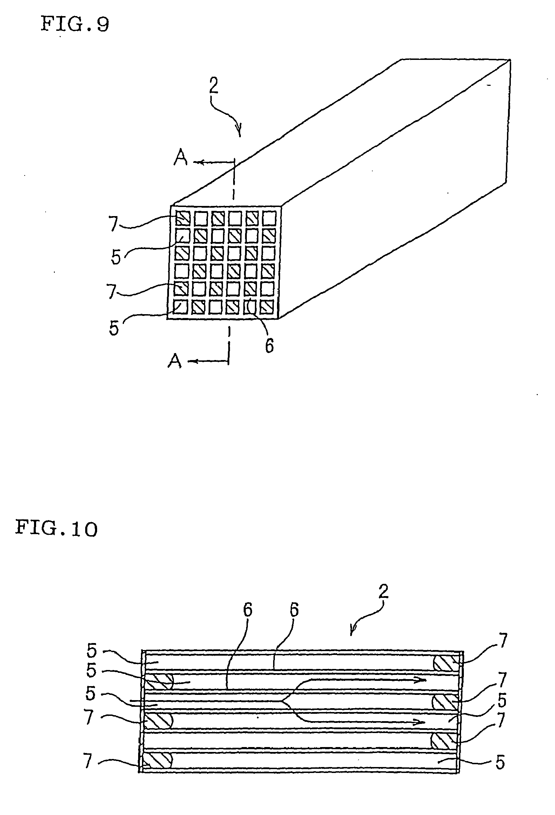

Incidentally, a honeycomb segment 2 used in the present invention has a shape constituting a part of the whole structure of a honeycomb structure 1 (honeycomb segment joined body 10) as show in Figs. 9 and 10 and has a shape constituting the whole structure by being incorporated in a direction perpendicular to the central axis of the honeycomb structure 1 (see, e.g., Fig. 1). Cells 5 are disposed so as to be in parallel with one another in the direction of the central axis of the honeycomb structure 1, and the end portions of adjacent cells are alternately plugged with a filler 7.

Predetermined cells 5 (inflow cells), as shown in Figs. 9 and 10, are plugged with a filler 7 on its right end side, while they are open on its left end side. The other cells 5 (outflow cells) adjacent to the above cells are plugged with a filler 7 on its left end side, while they are open on its right end side. By such plugging, as shown in Fig. 9, an end face of a honeycomb segment 2 shows a checkerwise pattern. In the case that a honeycomb structure 1 obtained by joining a plurality of such honeycomb segments 2 is disposed in an exhaust gas system, exhaust gas flows into cells 5 of each honeycomb segment 2 from the left side in Fig. 10 and move to the right side.

Fig. 10 shows the case where the inlet for exhaust gas is on the left side of the honeycomb segment 2. Exhaust gas flows into the honeycomb segment 2 from the cells 5 (inflow cells) opening without being plugged. The exhaust gas flowing into the cells 5 (inflow cells) passes through porous partition walls 6 and flows out from the other cells 5 (outflow cells). When the exhaust gas passes through the partition walls 6, particulate matter containing soot in exhaust gas is trapped in partition walls 6. Thus, exhaust gas can be purified. Since particulate matter containing soot accumulates with time inside the honeycomb segment 2 to raise pressure loss, regeneration of combusting soot or the like is performed. Incidentally, though Figs. 9 and 10 shows a honeycomb segment 2 having a square whole cross-sectional shape, the shape may be a quadrilateral, a partially deformed shape thereof, a triangle, a hexagon, or the like. The cell 5 may have a cross-sectional shape of a polygon, a circle, an ellipse, a racetrack, or a partially deformed shape thereof.

It is preferable to use, as a material for a honeycomb segment 2 used in the present invention, at least one kind selected from the group consisting of silicon carbide, silicon-silicon carbide based composite material, silicon nitride, cordierite, mullite, alumina, spinel, silicon carbide-cordierite based composite material, silicon-silicon carbide composite material, lithium aluminum silicate, aluminum titanate, and Fe-Cr-Al based metal from the view point of strength and thermal resistance. Of these, silicon carbide or silicon-silicon carbide based composite material is preferable.

The honeycomb segment 2 can be manufactured by, for example, adding a binder such as methyl cellulose, hydroxypropoxyl cellulose, hydroxyethyl cellulose, carboxymethyl cellulose, and polyvinylalcohol, a surfactant, water as a solvent, and the like, to a material suitably selected from the above materials to obtain clay having plasticity, subjecting the clay to extrusion forming to give the aforementioned shape, drying the formed body with microwaves, hot air, or the like, and sintering the formed body.

A material as the filler 7 used for plugging the cells 5 may be a material similar to that for the honeycomb segment 2. The plugging with the filler 7 can be performed by immersing an end face of the honeycomb segment 2 in a slurried filler 7 in the state that cells 5 not to be plugged are masked to fill the filler 7 into the open cells 5. Though the filler 7 may be filled before or after firing after forming the honeycomb segment 2, filling before firing is preferable because it requires only one firing step.

Incidentally, the honeycomb segment 20 used in a honeycomb structure shown in Fig. 5 can be manufactured in a method similar to that for the above honeycomb segment 2.

After the honeycomb segment 2 described above is manufactured, a slurried bonding material layer (partial bonding material layer) is applied on the outer peripheral surface of the honeycomb segments 2 and 20, a plurality of honeycomb segments 2 and 20 are combined at predetermined positions to give a predetermined solid shape (whole structure of the honeycomb structure 1), the combined honeycomb segments are press fitted in this state and then dried by heating. Thus, a honeycomb segment layered body 14 where a plurality of honeycomb segments 2 is unitarily joined is manufactured. Then, the outer periphery of the layered body 14 is subjected to grinding to give the aforementioned shape to obtain a honeycomb segment joined body 10, whose outer peripheral surface is then covered with a coating material 4, and dried by heating. Thus, a honeycomb structure 1 shown in Figs. 1, 2, 4, 5, and 8 is manufactured.

A bonding material layer (partial bonding material layer) used in the present invention is applied on an outer peripheral surface of honeycomb segments and functions to bond honeycomb segments. A bonding material layer (partial bonding material layer) may be formed by, for example, manufacturing honeycomb segments, applying a slurried bonding material layer on outer peripheral faces of honeycomb segments 2, incorporating the honeycomb segments to give a predetermined solid shape (whole structure of a honeycomb structure 1), press-fitting the structure in this state, and drying the structure by heating.

In this case, though the bonding material layer may be applied on an outer peripheral face of each of adjacent honeycomb segments, the bonding material layer may be applied on only one of the corresponding outer peripheral faces of adjacent honeycomb segments 2. Such application on only one of the corresponding faces is preferable in that an amount of the bonding material layer (partial bonding material layer) can be saved.

A suitable example of the bonding material layer (partial bonding material layer) used in the present invention is one constituted by inorganic fibers, an inorganic binder, an organic binder, and inorganic particles. Specifically, examples of the inorganic fibers include oxide fibers of aluminosilicate or alumina, and other fibers such as SiC fibers. Examples of the inorganic binder include silica sol, alumina sol, and clay. Examples of the organic binder include polyvinylalcohol (PVA), carboxymethyl cellulose (CMC), and methyl cellulose (MC). Examples of the inorganic particles include ceramics such as silicon carbide, silicon nitride, cordierite, alumina, and mullite.

The outer peripheral coat layer 4 is applied on the outer peripheral surface of a honeycomb segment joined body 10 and functions to protect the outer peripheral surface of a honeycomb segment joined body 10 (see Fig. 8). Thickness of the outer peripheral coat layer is suitably selected from, for example, the range from 0.1 to 1.5 mm.

Incidentally, it is preferable that the bonding material layer (partial bonding material layer) and the outer peripheral coat layer have a thermal conductivity of 0.1 to 5.0 W/m·k and a relatively low thermal expansion coefficient within the range from 1×10⁻⁶ to 8×10⁻⁶/°C in order to inhibit crack generation due to a thermal shock or the like.

### Examples

The present invention will hereinbelow be described in more detail with Examples. However, the present invention is by no means limited to these Examples.

### (Manufacture of honeycomb segment)

As a honeycomb segment raw material, SiC powder and metal Si powder were mixed together at a mass ratio of 80:20. To the mixture were added starch and foaming resin as a pore former and further added methyl cellulose and hydroxypropoxylmethyl cellulose, a surfactant, and water to prepare clay having plasticity. The clay was subjected to extrusion forming to obtain a honeycomb segment formed body. The honeycomb segment formed body was subjected to plugging at both the end faces so that the end faces each might show a checkerwise pattern. That is, plugging was performed in such a manner that adjacent cells are plugged at an end portion on mutually opposite sides. As a plugging material, a material similar to the honeycomb segment raw material was used. Both end faces of the cells was plugged, and then dried. Then, the binder was degreased at about 400°C in an ambient atmosphere, and subsequently, the honeycomb segment formed body was fired at about 1450°C in an Ar inert atmosphere to obtain a honeycomb segment having a porous structure in which SiC crystal particles were bonded with Si (see Figs. 9 and 10) .

### (Preparation of bonding material)

Water was added to a mixture of aluminosilicate fibers as inorganic fibers, colloidal silica and clay as an inorganic binder, and SiC as inorganic particles, and, according to circumstances, an organic binder (CMC, PVA), foaming resin, and dispersant were added. The mixture was kneaded for 30 minutes with a mixer to obtain a paste-like bonding material.

### (Manufacture of honeycomb structure)

### [Example 1]

Sixteen honeycomb segments having a square cross section with a side of 36.2 mm and a length of 254 mm were joined in such a manner that a adhesive thickness t₂ of a joint portion (bonding material layer) 12 where four honeycomb segments 20 not disposed in the outermost periphery were facing one another was 2.0 mm and that a adhesive thickness t₁ of a joint portion (bonding material layer) 9 in the periphery of 12 honeycomb segments 2 disposed in the outermost periphery was 1.0 mm. Pressure was applied from outside to join the whole honeycomb segments, and then drying was performed for 2 hours at 140°C to obtain a honeycomb segment layered body 14. Then, the outer periphery of the honeycomb segment layered body 14 was cut off, and a coating material was applied and dried for 2 hours at 700°C for hardening to obtain a DPF (honeycomb structure) of 143.8 x 143.8 x 254 mm (see Fig. 1).

### [Example 2]

Sixteen honeycomb segments having a square cross section with a side of 36.2 mm and a length of 254 mm were joined in such a manner that a adhesive thickness t₂ of a joint portion (bonding material layer) 12 where four honeycomb segments 20 not disposed in the outermost periphery were facing one another was 5.0 mm and that a adhesive thickness t₁ of a joint portion (bonding material layer) 9 in the periphery of 12 honeycomb segments 2 disposed in the outermost periphery was 1.0 mm. Pressure was applied from outside to join the whole honeycomb segments, and then drying was performed for 2 hours at 140°C to obtain a honeycomb segment layered body 14. Then, the outer periphery of the honeycomb segment layered body 14 was cut off, and a coating material was applied and dried for 2 hours at 700°C for hardening to obtain a DPF (honeycomb structure) of 143.8 x 143.8 x 254 mm (see Fig. 2).

### [Comparative Example 1]

Sixteen honeycomb segments having a square cross section with a side of 36.2 mm and a length of 254 mm were joined in such a manner that a adhesive thickness t₂ of a joint portion (bonding material layer) 12 where four honeycomb segments 20 not disposed in the outermost periphery were facing one another was 7.0 mm and that a adhesive thickness t₁ of a joint portion (bonding material layer) 9 in the periphery of 12 honeycomb segments 2 disposed in the outermost periphery was 1.0 mm. Pressure was applied from outside to join the whole honeycomb segments, and then drying was performed for 2 hours at 140°C to obtain a honeycomb segment layered body 14. Then, the outer periphery of the honeycomb segment layered body 14 was cut off, and a coating material was applied and dried for 2 hours at 700°C for hardening to obtain a DPF (honeycomb structure) of 143.8 x 143.8 x 254 mm (see Fig. 3).

### [Comparative Example 2]

Sixteen honeycomb segments having a square cross section with a side of 36.2 mm and a length of 254 mm were joined in such a manner that a adhesive thickness t₁ of a joint portion (bonding material layer) 9 in the periphery of 16 honeycomb segments 2 was 1.0 mm. Pressure was applied from outside to join the whole honeycomb segments, and then drying was performed for 2 hours at 140°C to obtain a honeycomb segment layered body 14. Then, the outer periphery of the honeycomb segment layered body 14 was cut off, and a coating material was applied and dried for 2 hours at 700°C for hardening to obtain a DPF (honeycomb structure) of 143.8 x 143.8 x 254 mm (see Fig. 6).

At this time, adhesive thickness t₁ and t₂ of portions where four honeycomb segments not disposed in the outermost periphery of the above DPF are facing one another are measured in the center of each side in all the joint portions of segments having a complete shape in the end face on one side of a product as shown in Fig. 7. The measurement was performed on both the end faces. The results are shown in Table 1.

### (Evaluation)

A regeneration test was performed in a diesel engine using four DPFs obtained above (Example 1 or Example 2, Comparative Example 1 and Comparative Example 2). The results are shown in Table 1.

In the soot regeneration test, post injection was started in the state of a soot amount of 8 g/L (soot accumulation of 8 g/L), an engine rev count of 1800 rpm, and an engine torque of 90 Nm and stopped when pressure loss in front of and at the back of the DPF started falling. The highest temperature inside the DPF and the maximum temperature gradient when the state of the engine was shifted to idling were measured, and presence/absence of a crack in the DPF after the test was confirmed.

**[Table 1]**

| | Example 1 | Example 2 | Comp. Ex. 1 | Comp. 2 Ex. |
|---|---|---|---|---|
| Adhesive thickness of a portion where four segments are not disposed in the outermost periphery and facing one another, (mm) | 2 | 5 | 7 | 1 |
| Highest temperature (°C) | 900 | 860 | 840 | 925 |
| Maximum temperature gradient (°C /cm) | 130 | 145 | 180 | 120 |
| Crack generation | None | None | Present | Present |

If the engine is shifted to idling in the state that soot accumulating in the DPF is under combustion at this time, an oxygen content rises, and an amount of inflow exhaust gas decreases. Therefore, temperature inside the DPF rapidly rises. When the temperature inside the DPF is too high, a catalyst loaded on the DPF sometimes deteriorates, or a crack sometimes generates in the DPF.
The highest temperature inside the DPF tends to be seen in the central portion in the vicinity of the downstream end face with respect to the axial direction of one of the four segments not disposed in the outermost periphery.

Incidentally, the maximum temperature gradient inside the DPF is seen in the vicinity of the downstream end face with respect to the axial direction in the section near the bonding material between the central portion of one of the four honeycomb segments not disposed in the outermost periphery and a 45° direction from the central portion. Temperature inside the DPF was measured using five points (disposed evenly with respect to the axial direction) for each, ten points in total, of thermocouples were inserted in the central portion and near the bonding material in 45° direction from the central portion of one of the four honeycomb segments not disposed in the outermost periphery.

### ((Discussions)

The results of Table 1 shows that, by making thick (increasing heat capacity) a adhesive thickness of portions where four honeycomb segments easily having high temperature upon soot combustion and not disposed in the outermost periphery were facing one another in Examples 1 and 2 in comparison with Comparative Example 2, more heat in the honeycomb segments could be released to the bonding material to lower the highest temperature. Though the highest temperature of Comparative Example 1 was lower than that of Comparative Example 2, the maximum temperature gradient of Comparative Example 1 was high, and a crack was caused. Incidentally, it was found that, in Examples 1 and 2, the highest temperature inside the DPF under the same regeneration conditions can be lowered upon practical use, particularly upon regeneration, thereby inhibiting deterioration and melting in a catalyst due to high temperature and reducing a temperature difference between the central portion and the outer peripheral portion of a honeycomb segment to effectively inhibit occurrence of a defect such as a crack inside the honeycomb segment.

A honeycomb structure of the present invention is useful as a trapping filter for exhaust gas, for example, as a diesel particulate filter (DPF) for trapping and removing particulate matter contained in exhaust gas from a diesel engine or the like.

## Claims

1. A honeycomb structure comprising:
a honeycomb segment joined body having a plurality of honeycomb segments unitarily joined at bonding faces thereof by means of a bonding material layer, and
an outer peripheral coat layer covering a surface of an outer peripheral portion of the honeycomb segment joined body;
in which a plurality of cells functioning as fluid passages are disposed to be in parallel with one another in a direction of a central axis;
wherein a bonding material layer between honeycomb segments constituting a central portion with respect to a diametral direction of the honeycomb segment joined body is made thicker than a bonding material layer between honeycomb segments constituting the outer peripheral portion of the honeycomb segment joined body.

2. A honeycomb structure according to Claim 1, wherein a bonding material layer between the honeycomb segments constituting the central portion with respect to a diametral direction of the honeycomb segment joined body is 2 to 5 times thicker than a bonding material layer between the honeycomb segments constituting the outer peripheral portion of the honeycomb segment joined body.

3. A honeycomb structure according to Claim 1 or 2, wherein an R portion is provided at a corner of each of the honeycomb segments constituting the honeycomb segment joined body.

4. A honeycomb structure according to any one of Claims 1 to 3, wherein a size of the honeycomb segments constituting the central portion with respect to a diametral direction of the honeycomb segment joined body is smaller than that of the honeycomb segments constituting the outer peripheral portion of the honeycomb segment joined body.
